# EUROPEAN PATENT APPLICATION

(11) **EP 0 610 581 A2**
(43) Date of publication of application: **17.08.1994**
(21) Application number: 93120302.0
(22) Date of filing: 16.12.1993
(51) Int. Cl.: G06F 15/72

(54) **Visualization tool for graphically displaying trace data produced by a parallel processing computer**

(30) Priority: 29.01.1993 US 11436
(71) Applicant: International Business Machines Corporation, Armonk, N.Y. 10504 (US)
(72) Inventor: Advani, Deepak Mohan, Port Ewen, New York 12466 (US); Byron, Michael Justin, Simsbury, Connecticut 06070 (US); Hansell, Steven Robert, Shokan, New York 12481 (US); Panda, Rajendra Datta, Austin, Texas 78759 (US); Pierce, James Andrew, Whitney Point, New York 13862 (US); Wang, Ko-Yang, Yorktown Heights, New York 10598 (US); Welch,Robert Spencer, Kingston New York 12401 (US)
(74) Representative: Teufel, Fritz, Dipl.-Phys.

(57) **Abstract**

A visualization tool (100) for creating graphic displays of trace data produced by a parallel computer program execution monitoring system. The visualization tool contains a display monitor (105), input devices (120), a mass storage device (125), and a computer system (115). The computer system further contains a graphics processor (135) having a data processor (210) for converting the trace data into data structures. Application logic (215) stores all the data structures in an event history storage device (230). A subset of those data structures are converted into a pixel map and stored in a buffer. A graphics display generator (130) produces a display (300) on the monitor containing the pixel map from the buffer. The display has a pre-selected display format. Typically, multiple displays are generated through using a plurality of application logic. In this manner, multiple, synchronous displays are produced. Each display is synchronized to a time-varying display having a time reference line vertically oriented through the display. As such, each of the displays are synchronized to a time represented by the time reference line.

## Description

### BACKGROUND OF THE DISCLOSURE

### 1. Field of the Invention

The invention relates to computer program execution and analysis systems and methods, and more particularly, to systems and methods for creating graphics of results yielded by a computer program execution monitoring system.

### 2. Description of the Prior Art

In order to improve performance of computer code used in parallel processing computer systems, it is often necessary to determine and display certain data that is indicative of code execution. Generally, apparatus, known as computer program execution monitoring systems (hereinafter referred to as monitoring systems) monitor computer programs as they are executed on parallel nodes, i.e., within parallel processing units, of a parallel processing computer. As the programs are monitored, the monitoring system generates data indicative of various functions performed by each node and stores the data in a mass storage memory device. Typically, the monitoring system organizes the data into a historical file known as a trace file. The data within the trace file is known as trace data; each individual datum within the trace data is known as an event.

Generally, trace data are a time-ordered series of recorded indicia representing changes to the information and/or control state of the parallel processing computer. Typically, an individual event contains a number of data fields. The type of event being recorded defines the number of fields in a given event and the information contained in each field. For example, whenever one processor within the parallel processing computer passes information (e.g., a message) to another processor within the same computer, the monitoring system produces and stores a "send" event. A send event may contain a time field indicating when the event was recorded by the monitoring system, a send processor field identifying the processor that sent the message, a receive processor field identifying the processor to which the message is directed, a start time field indicating a time that the message was sent, and a stop time field indicating the time that the message ceased being sent.

Other examples of events are "receive" events, produced whenever a processor in the parallel processing computer receives a message from another processor, and "central processing unit (cpu) utilization" events, produced whenever the parallel processing computer utilizes a processor. Those skilled in the art will recognize that the foregoing examples of events which form trace data are merely illustrative of the many types of events which can be produced and stored by a monitoring system. The production and use of trace data is well known in the art. Therefore, further discussion of trace data per se is not necessary to understand our inventive visualization tool.

Typically, a parallel processing computer in cooperation with a monitoring system displays trace data as a single, real-time display while the computer executes a parallel program. Simultaneously, a direct access storage device (DASD), such as a disk drive associated with the computer, stores the trace data for future review and/or processing. Subsequently, a computer used to facilitate debugging of the parallel program sorts the trace data by particular event or event field, i.e., the trace data are sorted to find errors and anomalies that occurred during program execution. Once the errors are determined, a programmer can correct the program.

Other trace data processing methods are designed to produce individual graphical displays of trace data to facilitate "tuning" the parallel program to optimize processor utilization. One such trace data processing and display method is disclosed in United States Patent No. 5,168,554 entitled "Converting Trace Data From Processors Executing In Parallel Into Graphical Form", issued to Charles A. Luke on December 1, 1992 (hereinafter referred to as the Luke '554 patent). Specifically, the Luke '554 patent discloses a method of creating a "time process diagram" that depicts processor utilization during execution of a parallel program. The method includes searching previously recorded trace data for specific types of events, i.e., those events that indicate processor utilization, and generating a table of those events. The events in the table are arranged in a time sequential manner. From the table, the method disclosed in this patent produces either a diagram (displays) showing a number of processors operating during a particular time interval or a diagram showing specific event activities which occurred during that particular time interval. The user can then scroll forward and backward within either diagram to display a different time interval from that previously displayed. From these displays, a programmer can tune (alter) the parallel program to optimally execute on a particular parallel processing computer.

Inasmuch as conventional display apparatus known in the art typically concurrently displays trace data from many processors in a single display format, a programmer faces a tedious, burdensome and often confusing task of simultaneously visualizing relative performance data for more than a small number, e.g., two or three processors, and comparing the trace data therefrom. Traditionally, the trace data displays portray the data in a textual format only, or in a mixed textual and graphical format. Moreover, the art presently does not provide methods of generating multiple and simultaneous display of various trace data display formats. Consequently, in an application program that extends over a relatively large number of processors, reviewing and analyzing the trace data can simply be too daunting to be practically accomplished by even an experienced programmer.

Thus, a need exists in the art for improved systems and methods that can afford a user the ability to quickly access, easily review and understand trace file data, particularly for programs that are simultaneously executed by many processors.

### SUMMARY OF THE INVENTION

Our invention advantageously overcomes the deficiencies heretofore associated with displaying trace data from a parallel processing computer. In particular, our inventive visualization tool generates multiple synchronous displays which a user may interactively manipulate.

Specifically, in accordance with the present invention by a visualization tool for graphically displaying trace data. The visualization tool comprises a display monitor, a display control that enables a user to input display manipulation commands, a mass storage device for storing the trace data and a computer system that is connected to the display monitor, the display control, and the mass storage device. The computer system includes a data processor for converting each event in the trace data into one or more data structures. The form of each data structure depends upon the display format for the particular display selected by the user. Within the data processor are data sub-processors that are associated with each possible display format. In this manner, when a user selects one or more display formats for the trace data, corresponding data sub-processors are utilized to convert each event into a representative data structure, i.e., one data structure per sub-processor.

Each sub-processor passes its data structures to associated application logic. The application logic stores each data structure, as it is produced, into an associated event history storage. Each event history storage is sized to store all or a portion of the trace file of data structures. Additionally, each application logic converts a sub-range of the structures held in the event history storage, typically, enough data structures to create a display, into a pixel map (pixmap). Each sub-range selected from each event history storage represents an identical time interval as any other sub-range of data structures used to form other pixmaps. Graphical interface generation software, such as X-windows or comparable software, converts each sub-range of data structures to a respective pixmap. Importantly, the data structures within each event history storage are all synchronized in time. Therefore, the pixmaps all represent an identical time interval. In this manner, the displays created from each sub-range produced in a synchronous fashion and subsequent updates to those displays are also synchronous.

A graphics display generator uses the pixmaps to produce, on the monitor, a number of displays. Each display is portrayed within individual windows. After the displays are first produced, our visualization tool produces each subsequent data structure and places that data structure into a respective event history storage. Consequently, the sub-range of data structures for each display is updated and those updated sub-ranges are converted into updated pixmaps. As a result, the graphics display generator updates all the displays in a synchronous fashion.

Once all of the trace data is processed and displayed, a user may, by manipulating input devices, control the data displayed in the various displays. Typically, a time-varying display having a reference time-line, such as a parallelism display, is used as the time synchronization reference for all the displays. The time represented by the reference time-line is known as a "time-line time". As the user manipulates the display, the time-line time will change. Because all the displays are synchronized to the time-line time, our visualization tool updates all instantaneous displays, e.g., pie charts and bar graphs, as the time-line time changes and all time-varying displays portray data synchronized to the time-line time as well. Display synchronization is accomplished by assuring that the data structures converted into the pixmap, i.e., the sub-range, represent a time interval that is equivalent for every display. As a user moves through a given time-varying display, such as the parallelism display, the pixmap is updated with converted data structures from the event history storage. In this manner, the user can interactively manipulate and review the trace data in a variety of synchronous displays using a number of display control functions.

### BRIEF DESCRIPTION OF THE DRAWINGS

The teachings of the present invention can be readily understood by considering the following detailed description in conjunction with the accompanying drawings, in which:
FIG. 1 is a high level block diagram of visualization tool 100 for producing graphical displays in accordance with our invention;
FIG. 2 is a block diagram of graphics processor 135;
FIG. 3 shows illustratively monitor screen 110 containing window 300 and parallelism display 305 in accordance with our present invention;
FIG. 4A-4F collectively show monitor screen 110 at periodic intervals of time while visualization tool 100 produces parallelism display 305 from trace data;
FIG. 5 illustratively portrays monitor screen 110 containing window 300 and message passing display 500 in accordance with our present invention; and
FIG. 6 depicts a flow chart of routine 599 by which graphics processor 135 operates.

To facilitate understanding, identical reference numerals have been used, where possible, to designate identical elements that are common to the figures.

### DETAILED DESCRIPTION

After considering the following description, those skilled in the art will clearly realize that the teachings of our invention can be readily utilized for display of any data which is produced in a parallel manner. In particular, our invention is suitable for displaying trace data from a parallel processing computer.

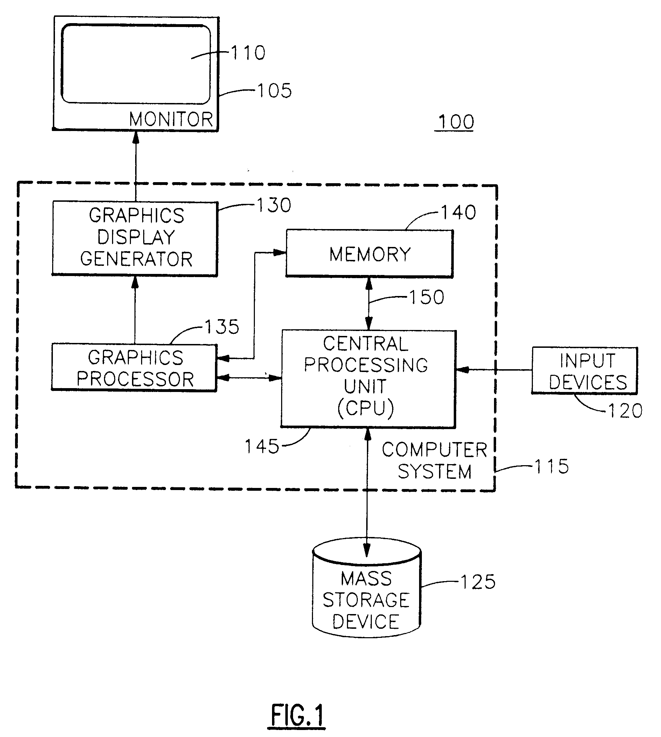

FIG. 1 is a block diagram of visualization tool 100 which is arranged in accordance with our invention for producing display windows on screen 110 of computer display monitor 105. Visualization tool 100 contains computer display monitor 105, computer system 115, mass storage device 125 and input devices 120. Typically, the mass storage device is a tape drive or hard disk drive. Additionally, the input devices typically include a keyboard and a mouse. Alternatively, a track ball may be used instead of a mouse. The monitor is a typical computer monitor capable of producing computer graphics.

Computer system 115 contains central processing unit (CPU) 145, memory 140, graphics processor 135 and graphics display generator 130. In a well known manner, input devices 120 provide input signals to CPU 145. Memory 140 contains both read-only- memory (ROM) and random-access-memory (RAM). CPU 145 accesses, along line 150, memory 140 as necessary to execute particular programs and retrieve and create specific data files. Additionally, the CPU accesses, as necessary, files and programs from mass storage device 125. As the files and programs are retrieved from the mass storage device, these files and programs are typically stored within the RAM situated in memory 140.

Graphics processor 135 is the main component of our inventive visualization tool. Generally, the graphics processor can be implemented as either a hardware circuit or, preferably, as a software program recalled from memory 140 and executed by CPU 145. In either implementation, the graphics processor accesses memory 140 to retrieve data for display. Graphics processor 135 is under direct control of CPU 145. In operation, the graphics processor produces a pixel map (pixmap) from trace data. The pixmap is used by graphics display generator 130 to produce, on monitor 105, specific types of displays, i.e., specific display formats. A pixmap is an array of pixel values organized to form a pattern. Hence, the pattern is a window having an area within which certain data is displayed. Graphics processor 135 creates the pixmap from trace data retrieved by CPU 145 from mass storage device 125. Alternatively, the trace data may be received directly from a network as the trace data is generated in a parallel processing computer. For example, the trace data are events either previously stored or currently being generated by a computer program execution monitoring system (not shown) during execution of a program on a parallel processing computer. The graphics processor transforms the trace data into a pixmap that can be used by graphics display generator 130 to produce one or more display windows on screen 110 of display monitor 105.

In operation, a user can request, by manipulating input devices 120, that computer system 115 recall a particular trace file containing trace data (events) from mass storage device 125 and pass each event to graphics process 135. The user also selects, by manipulating input devices 120, a display format in which the events will be displayed and a resolution for the display. The graphics processor converts each event in the trace file into a specific data structure defined by the previously selected display format. If more than one display format was selected, e.g., four formats, then more than one data structure, e.g., four structures, is produced. The form of the data structures is discussed in detail below. As each data structure is produced, the graphics processor stores them in the RAM within memory 140. Afterwards, graphics processor 135 converts a subset of all the data structures (hereinafter referred to as sub-range) into a pixmap. Then, the pixmap is transferred to graphics display generator 130. In response, the graphics generator produces a graphic display window containing a graphical representation of the data structures representing the events. Through manipulation of the input devices, the user can manipulate the displayed representation within the display window. In particular, the user can move the representation in time relative to the display window. In this manner, event data will appear to progress in a time sequential manner through the window.

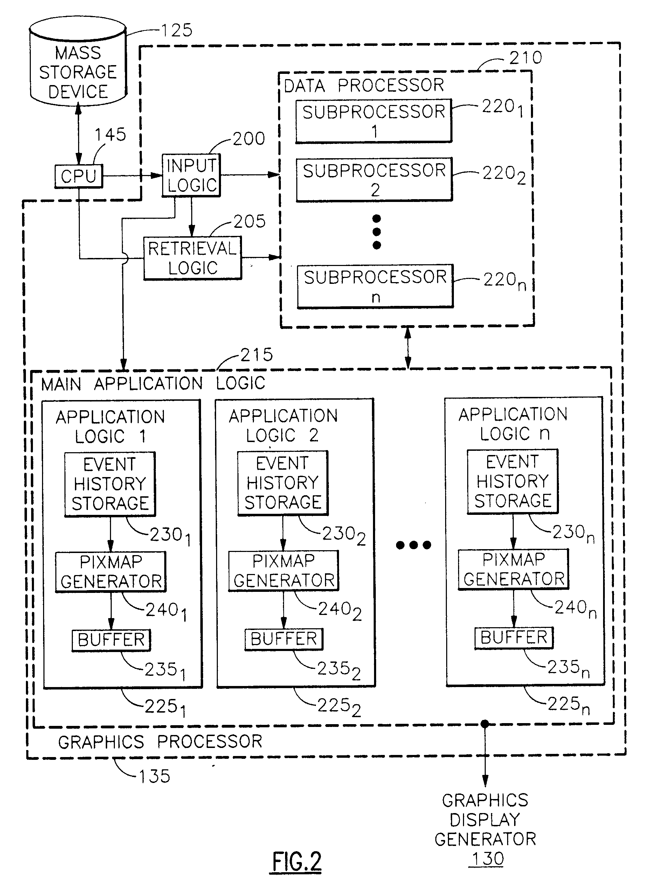

FIG. 2 is a block diagram of graphics processor 135. For the following detailed discussion of the operation of the graphics processor, trace data is used as the illustrative form of data to be processed and displayed by our inventive apparatus. However, those skilled in the art will recognize that nearly any data capable of being displayed in a time sequential manner can be displayed by our inventive apparatus in an intuitive and user- friendly manner.

Graphics processor 135 contains input logic 200, data retrieval logic 205, data processor 210, and main application logic 215. A user enters functional control commands through the input devices, i.e., typically, by producing signals from a mouse and keyboard. The resulting mouse and keyboard commands are first interpreted by CPU 145; with the interpreted commands then sent to the input logic for implementation. Generally, the control commands allow a user to select one or more display formats, select a specific trace file to be processed, initiate processing of that trace file and review a displayed representation of the events contained in the trace file. The specific commands and their functions are all discussed in detail below.

When a user indicates, through control commands, that he or she wishes to display trace data which is currently stored as a trace file on mass storage device 125, input logic 200 issues a retrieval command to data retrieval logic 205 to retrieve the desired trace file from mass storage. The retrieval command is ultimately implemented by CPU 145 because it alone has direct access to mass storage device 125. The CPU retrieves the trace file as requested by the retrieval logic. The file is retrieved in time sequential order, one datum at a time, i.e., one event at a time. Retrieval logic 205 transfers the retrieved events to data processor 210. Specific implementations of such retrieval logic are well known in the art.

Data processor 210 translates the events into data structures useful for generating displays. Subprocessors 220₁, 220₂, ..., 220ₙ (where n is an arbitrary integer value), one for each selected display format, are used to appropriately process the incoming events. When the user selects the display format(s), the input logic establishes which of the n sub- processors is to be used to produce a data structure for each display format. For instance, a sub-processor for a pie chart display will accumulate from each event particular fields necessary to generate the pie chart and disregard all other field data. On the other hand, other sub-processors may use other fields within a given event to produce data structures appropriate to the displays which these sub-processors are pre-programmed to generate. Specific implementation of particular software routines useful in producing data structures from events would be readily apparent to those skilled in the art. Therefore, specifics of such software routines are not necessary to the understanding of our invention.

For example, a display representing parallelism at periodic time intervals would be produced from a stream of sequential data structures. Parallelism is a term of art which defines a total percentage of processors, in a parallel processing computer, which are processing data at any specific instant of time. To facilitate generating a parallelism display, each data structure is produced, at periodic intervals, from cpu utilization events. A given cpu utilization event contains a cpu unitization field which indicates a percentage of processor utilization for a particular processor processing data at the moment the event was recorded. The percentage of cpu utilization for each processor is measured and placed in the event as a cpu utilization value ranging from 0 to 100 percent. By summing the cpu utilization values for all processors operating at one instant, a total cpu utilization value is determined. This value also ranges from 0 to 100 percent.

Specifically, a time-varying display representing parallelism (hereinafter a parallelism display) uses certain fields of each event from the trace file to produce a data structure. In particular, the data structure contains a processor number and a cpu utilization field indicating a total cpu utilization value at a particular instant. That instant of time is represented by a time field generated when the event was recorded. This time field is also contained in the data structure. From this data structure, a data point (pixel value) can be generated on a display having time as an abscissa axis and total cpu utilization as an ordinate axis.

The data structures, as they are each generated, are transferred for further processing from data processor 210 to main application logic 215. Each sub-processor 220₁, 220₂, ..., 220ₙ is associated with a corresponding application logic 225₁, 225₂, ..., 225ₙ. The operation and implementation of the application logic will be apparent to those skilled in the art after reading the following discussion. Each application logic 225₁, 225₂, ..., 225ₙ has an associated and dedicated RAM memory space situated within memory 140 (see FIG. 1), shown in FIG. 2 as event history storage 230₁, 230₂, ..., 230ₙ. Thus, as the data processor 210 generates data structures, these structures are passed directly to the event history storage associated with each application logic. The event history storage stores many more data structures than are required for the application logic to generate a particular display. The CPU dynamically allocates an amount of RAM for event history storage up to an amount capable of storing the entire requested trace file. As a default display mode, an initial display window for a given display format will portray one-fourth of the data structures contained in the event history storage, i.e., the sub-range is one-fourth of the total number of data structures available for display.

Simultaneously with storing the data structures, each pixmap generator 240₁, 240₂, ..., 240ₙ converts a subset of corresponding data structure in a corresponding event history storage into a pixmap. Each pixmap will ultimately become a single display within a window portrayed on the monitor. As such, the plurality of pixmap generators, in turn, produce a plurality of pixmaps that correspond to a plurality of displays on the monitor. Each particular pixmap is created from a subset of data structures retrieved from the event history storage corresponding to a particular pixmap generator. This subset of data structures is referred to as a sub-range since the event history storage stores a set of data structures representing events that were recorded during a specific time period (range) and a subset of these data structures represents a sub-range of that recording period. Each pixmap generator produces a pixmap that corresponds to the specific display selected by the user. Each pixmap generator stores its respective pixmap in an assigned memory space symbolized by buffers 235₁, 235₂, ..., 235ₙ.

For example, if a user selects a pie chart display format and a time-varying display format to portray a certain trace file, the visualization tool uses, illustratively, sub-processor 220₂ to produce pie chart data structures and sub-processor 220₅ to produce time-varying display data structures. As such, each event produces two data structures. Main application logic 215 applies each data structure to a corresponding application logic, e.g., 225₂ and 225₅, respectively. Independently, the data structures are stored in respective event history storage 230₂ and 230₅. Main application logic 215 determines identical sub-ranges within each event history storage for conversion into pixmaps. Accordingly, pixmap generators 240₂ and 240₅ convert their respective sub- ranges of data structures into a pie chart pixmap and a time-varying display pixmap. Each pixmap is stored in respective buffers 235₂ and 235₅ until they are sent to the graphics display generator for portrayal on the monitor.

More specifically, each pixmap generator produces a pixmap in response to a default window size, a particular display format, and a particular display resolution. The default window size is preset for a particular display type. Once displayed, the window size can be altered by the user by manipulating the input devices. The particular display format and the display resolution are selected by the user at the outset of a trace file processing session. Display resolution defines the amount of time which is represented by each pixel in the display. Typically, the user selects a time interval (sub-range) to be displayed and the pixmap generator will automatically define the number of pixels to represent the length of that interval. For instance, if a user selects a 1 second display interval, the pixmap generator may select, illustratively, 1 million pixels to represent that duration along a horizontal display axis, e.g., one pixel for each microsecond (sec). However, if the data structures (and events) occur every nanosecond, then each pixel represents 1000 data structures. The user can alter this resolution by magnifying the display using a magnify function until each data structure is represented by a single pixel. The magnify function is controlled by the input devices and is discussed in detail below. The pixmap generator typically comprises software to interpret each data structure and software to produce a pixmap therefrom. Such software to facilitate pixmap generation is known in the art as graphical user interface (GUI) software. One such GUI software package is X-windows (a trademark of the Massachusetts Institute of Technology of Boston, Massachusetts). Through the use of well-known, callable routines in X-windows, the pixmap generator produces (paints) a display within a window. X-windows is widely used to facilitate production of GUIs. As such, further details of GUI software and pixmap generation is not necessary.

Each pixmap generator 240₁, 240₂, ..., 240ₙ stores its respective pixmap in pixmap buffer 235₁, 235₂, ..., 235ₙ. Each pixmap is subsequently updated with each new data structure that is converted by its associated pixmap generator. Between updates graphics display generator 130 (see FIG. 1) uses each pixmap to produce one or more displays on the screen of the monitor.

One such graphics display generator is the RS/6000 Color Graphics Display Adapter manufactured by International Business Machines Corporation of Austin, Texas. As a well known product, the details of such a circuit are not necessary for understanding of our invention. Suffice it to say that the graphics display generator is a serial device which is periodically sent a pixmap from the pixmap buffers to update the various displays. The updating is accomplished at a sufficiently rapid rate so that the user does not notice the serial nature of the updates. Thus a user perceives that all displays presently portrayed on the monitor screen as being simultaneously updated.

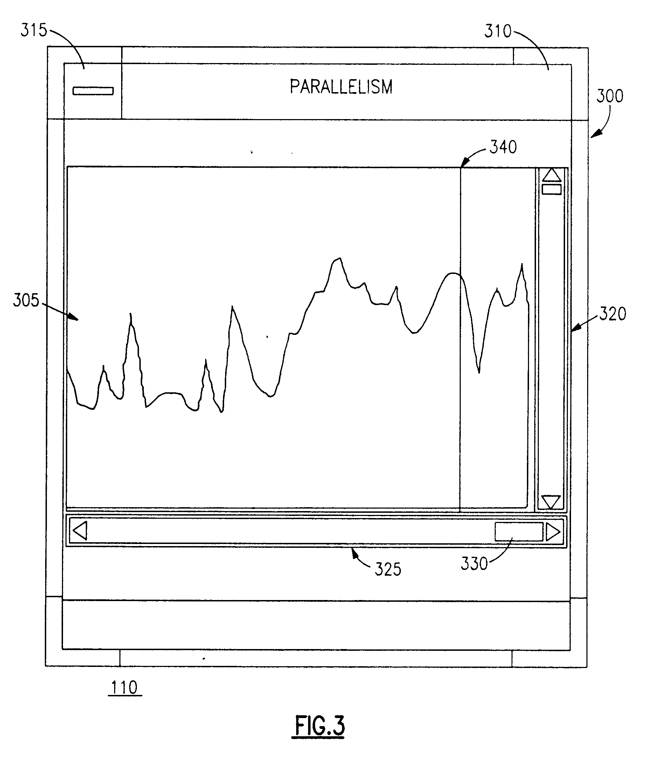

FIG. 3 shows illustrative parallelism display 305 located in window 300 on screen 110 of the monitor. As previously discussed, a parallelism display depicts cumulative parallelism of multiple processors operating in a parallel computer. Window 300 includes title bar 310 having a conventional window button, e.g., window menu button 315. Additionally, window 300 contains scroll bars 320 and 325. Scroll bar 320 is ineffective for this particular parallelism display. However, in other display formats scroll bar 320 moves the display in a vertical direction. This manner of display manipulation is well-known in the art. The length of scroll bar 325 represents a present length of the trace file stored in the event history storage. Indicator 330, specifically its width and relative position within scroll bar 325, indicates what portion (sub-range) of the trace file stored in event history storage is presently displayed in window 300 with respect to the entire trace file. Consequently, as described below, when a user reviews the events displayed, indicator 330 moves as the displayed data moves in time. The implementation and use of the window menu button and the scroll bars are well known and will, therefore, not be described in further detail.

Additionally, the display shown in FIG. 3 includes reference line 340 known as a "time-line". Illustratively, the time-line is positioned at a point approximately 85% of the window length, measured from the left window boundary. However, this time-line position is merely illustrative, a user may, by manipulation of the input devices, dynamically define the position of the time-line or, alternatively, establish the percentage setting when first initializing the visualization tool. In use, the time-line provides the user with an intuitive reference to which events depicted in the display can be referenced. Additionally, as is explained below, all non-time dependent displays (hereinafter referred to as instantaneous displays) that are currently portrayed on the monitor with the parallelism display are synchronized to the time represented by the time-line. As such, the user is provided a synchronous portrayal of information represented by the displays.

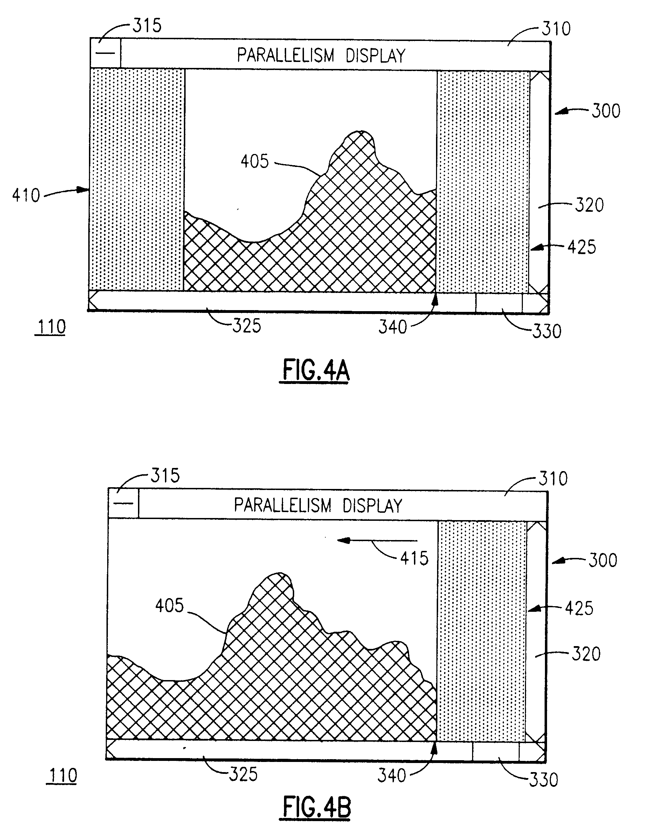

FIGs. 4A-4F show a parallelism display at periodic intervals as events are "played" across the window, i.e., processed and displayed. To enhance understanding, the reader should simultaneously refer to all these figures throughout the following discussions.

Assuming for simplicity that a user has only selected a single display format, e.g., a time-varying display format portraying parallelism, the visualization tool will use only a single sub-processor, application logic, event history storage, pixmap generator and pixmap buffer. Using the input devices, a user requests that a specific trace file be "played", i.e., retrieved in time sequential order and processed by the visualization tool. As the data processor produces each data structure, the data processor places each data structure in an associated event history storage (see FIG. 2). Additionally, as shown in FIG. 4A, simultaneous with storage the data structure is converted into a pixmap and displayed in window 300. The first data structure is displayed at time-line 340. As each new data structure is created, the pixmap is updated such that a pixel representing the event or event(s) (depending upon the present resolution) is displayed to the right of the previously depicted data structure. The cumulative effect of a sequential display of data structures is the generation of graph 405 (a representation of cpu utilization). To the left of the leftmost data structure then displayed is black area 410. This area represents where the first event in the trace file was represented. At present, time-line 340 corresponds to the current (most recently converted) data structure.

FIG. 4B depicts the state of window 300 after enough events have been processed and displayed to fill the window. As each new event is representatively displayed at time-line 340, graph 405 moves to the left (as indicated by arrow 415). The data structures representing the events that no longer are displayed within the window, i.e., not within the sub-range, are stored in the event history storage associated with this display.

Once the entire trace file, or a portion thereof, has been "played", a user can "scroll" through the previously displayed events using the input devices. Typically, the scroll function is controlled by either arrow keys on a conventional keyboard or using a graphical interface in conjunction with a mouse. Both types of user interface are well known in the art and, therefore, require no further explanation.

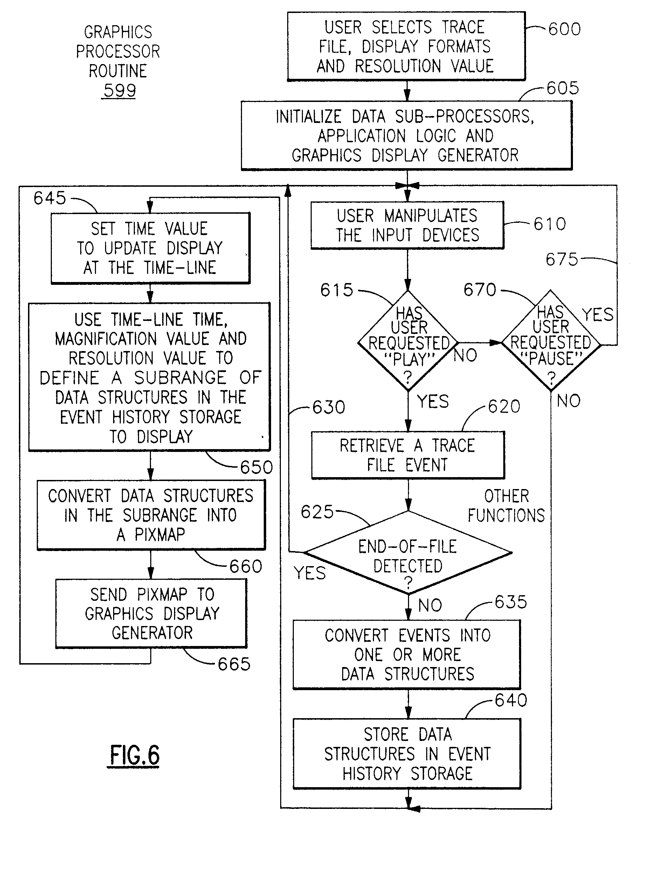

In operation, a scroll function causes a new sub-range of data structures to be defined and converted into a pixmap. To facilitate the conversion, the application logic recalls data structures from the event history storage which corresponds to the new sub- range. This new sub-range produces a new pixmap which, when displayed, moves the graph to either the right or left depending upon the scroll direction selected by the user. It is important to note that the new pixmap for a time-varying display will have a new time value aligned with the time-line (hereinafter referred to as time-line time). As such, all of the instantaneous displays, e.g., pie charts, bar graphs and the like, are synchronously updated to represent the events which correspond to the time-line time. Additionally, other time-varying displays will also synchronously update as well. Subsequently, if the scroll function is requested by the user again, the process discussed above, i.e., retrieve a new sub-range of data structures and produce a new pixmap, is repeated. This process is repeated again and again as long as the scroll function is requested. The time increment advanced between successive pixmaps is controlled by a scroll speed function. Typically, scroll speed is controlled by the input devices. A higher selected scroll speed will increase the time increment between pixmaps. The scroll function as well as other user selectable functions are described below with regard to FIG. 6.

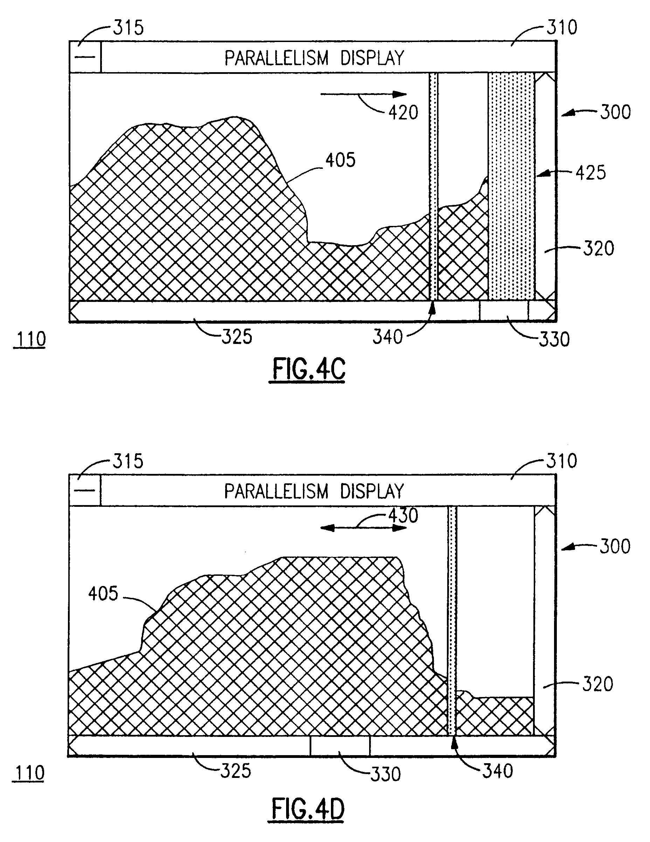

FIG. 4C shows window 300 at a moment when a user is beginning to scroll "backward" through the displayed events (as indicated by arrow 420). As such, the last event in the trace file displayed (shown at edge 426 of black area 425) moves to the right and a new sub-range of data structures is retrieved from event history storage and used to generate successive pixmaps which add to graph 405 on the left. In this manner, graph 405 appears to move, or scroll, to the right.

FIG. 4D shows the display after a full window of data structures has been recalled from event history storage and converted into a pixmap which fills the entire display window. As discussed above, time-line 340 forms a reference position within the display. As such, the display to the right of the time-line represents trace data having a time of occurrence later than that corresponding to time-line time and the display to the left of the time-line represents trace data having a time of occurrence earlier than that corresponding to the time-line time. Using the scroll function, a user can move back and forth (as indicated by arrow 430) through time to review events in the trace file.

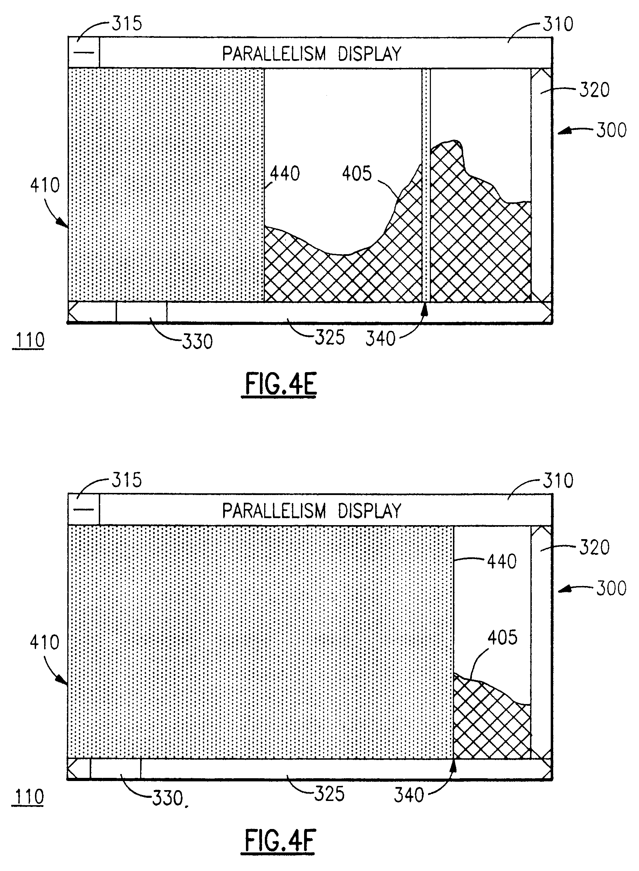

FIG. 4E shows the display after the scroll function has moved the display to the beginning of the event history storage. The first event(s) of the trace file is represented by a pixel at edge 440 of black area 410. As shown in FIG. 4F, if the user continues scrolling, edge 440 of black area 410 will stop at time-line 340. In this manner, the beginning of the event history storage is easily recognizable to a user.

Though only one window has been illustratively depicted on the screen at any instant, our invention can produce multiple windows on a single screen. In this manner, a user can simultaneously view various characteristics of a trace file. For instance, upon user selection, our invention creates instantaneous displays, such as pie charts, bar graphs and the like. The same process by which our invention creates time-varying displays, such as the parallelism display of FIG. 3 and FIGs. 4A-4F, is used to create an instantaneous display. The only difference is that different field information is culled from each event to produce a data structure which corresponds to a particular format of instantaneous display. As in the parallelism display, the data processor produces the data structures for the instantaneous displays and the application logic stores them in an event history storage. Each individual instantaneous display format has a respective sub-processor and event history storage. Typically, a given instantaneous display represents events that occur simultaneous with the time corresponding to the time-line time in a time-varying display. In this manner, all of the instantaneous displays shown at any one time are synchronized to one instant in time, namely, the time-line time. If a user scrolls a given time-varying display, all the instantaneous displays will simultaneously update to display information corresponding to the event(s) now lying under the time-line in the time-varying displays. Additionally, other time-varying displays will synchronously update as well. A detailed discussion of synchronous updating of individual displays is discussed with regard to FIG. 6.

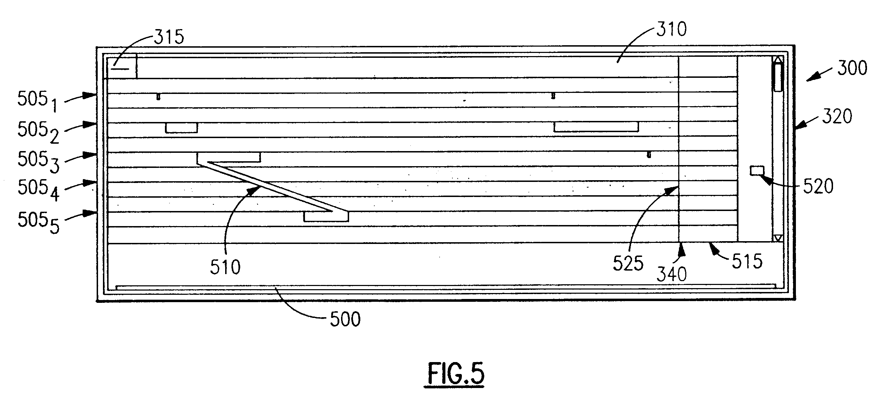

FIG. 5 shows window 300 containing another important time-varying display format, namely, message passing display 500. Generally, the data structures used to produce the message passing display are derived from send and receive events. Specifically, the fields used from both send and receive events to form a data structure are the type of message field, the start and stop time fields, processor number from which the message is sent, and processor number to which the message is sent. Display 500 contains rows 505₁, 505₂, 505₃, 505₄ and so on that represent each processor in the parallel processing computer. Send events are displayed in a color which contrasts with a color used to display receive events. For example, display 500 may use green pixels to represent send events and red pixels to represent receive events. Whenever a send event passes information from one processor, for example processor 3 (represented by row 505₃), to another processor, for example processor 5 (represented by row 505₅), the display depicts a line, such as line 510 connecting the two rows together. Such a connective path will visually indicate to the user the exact path along which a message has passed. Additionally, time-line 340 is provided to give the user a stationary time reference. As with the parallelism display, here the displayed message-passing information can be scrolled forward and backward beneath the time- line. In this manner a user can quickly review the display to note the message passing activity throughout a trace file.

An additional feature of this display appears to the right of data area 515; specifically shown as area 520, an instantaneous event area. Therein any event which is presently aligned with time-line 340 is displayed. This function is known as an event highlighting function. For example, if a send event from processor four presently lies beneath the time- line, green square 525 appears in instantaneous event area 520. This is an especially useful feature when the resolution of the display is very coarse and many send and receive events occur within a short amount of time. Under these conditions, the user can view the instantaneous events which are represented in the instantaneous event area as the user scrolls, event by event, through the display. If however, a pixel under the time-line represents a number of pixels, i.e., course resolution, then indicator 530 appears on the display to notify the user that some events are hidden. To view the hidden events, the user may magnify the display until each pixel in the display represents a single event. The magnification function is described in detail below. As a result of the highlighting feature in combination with the magnification function, a complex message passing display can be easily understood. Those skilled in the art will understand that such a highlighting function is useful in other display formats other than a message passing display.

Additionally, if more processor rows are displayed than fit in window 300, vertical scroll bar 320 can be used to display processor rows that are presently not shown in the viewing area of window 300.

FIG. 6, a high level flow chart showing general logical steps to implement graphic processor 135 (graphics processor routine 599), shows start-up step 600 in which a user must manipulate the input devices to select a particular trace file to be processed, one or more specific display formats, and a resolution value for those displays. For example, the user would select a trace file by name; select a time-varying display, such as a parallelism display, and a number of instantaneous displays; and a 1 sec resolution from a menu of resolution values. At step 605, the routine initializes all the data sub-processor, the application logic, and the graphics display generator. During initialization memory space is allocated to both the event history storage and to the application logic buffers. At step 610, the routine awaits a function request generated by a user manipulating the input devices. Once such a manipulation is detected, the routine must determine what function the routine should perform. In this regard, at step 615, the routine queries whether the user has requested the trace file to be "played". If the user requests that the trace file be "played", the routine continues to step 620. Alternative functions to the play function are discussed below.

At step 620, trace data is retrieved from the mass storage device one event at a time, i.e., one event for each pass through the loop represented by steps 620 through 665. At step 625, the routine queries whether an end-of-file indicator is retrieved rather than an event. If the end-of-file indicator is detected, the routine continues along path 630 to await a subsequent command from the user. If the end-of-file indicator is not detected, the routine continues to step 635. The data processor, using appropriate sub-processors as required by the user selected display formats, converts, at step 635, each event into one or more data structures. These data structures are stored, at step 640, in event history storage. As described previously, the event history storage can contain all of the data structures produced from a given trace file or a portion thereof.

At step 645, the routine sets a time value equivalent to a value of a time field in the data structures, e.g., a time at which the event occurred (event time). That time value is equated to the time- line time. In this manner, the event presently being processed will ultimately be displayed at the time-line since the time-line time and the event time are presently equivalent.

At step 650, the routine uses the time-line time, the magnification value (discussed below) and the resolution value to define a sub-range of data structures stored in the event history storage. Assuming for the moment that the magnification value is 1, the resolution value is 1 second, the event time is 12:00:00 exactly, the time-line is positioned at 85% of the display, the events occur every nanosecond, and presently there are 4 billion events stored in the event history storage. Under these circumstances, every 1000 events are displayed as a pixel, i.e., a resolution of 1 second with events occurring every nanosecond. Since event time is equivalent to the time-line time, the time-line time is exactly 12:00:00. Assuming that a display can accommodate 1 million pixels along its horizontal dimension, that display can show 1 second of data. However, during play, each new event is positioned at the time-line position (85%), thus only .85 seconds of the latest events will be displayed to the left of the time-line. The remainder of the display (15%) to the right of time-line is black (see FIG. 4B). Thus, the routine will establish a sub-range that extends from 11:59:59.15 to 12:00:00 within the event history storage. Every 1000^{th} data structure in that sub-range, 850,000 in all, are sent to the pixmap generator for conversion. At step 660, the data structures are converted into a pixmap; the pixmap is stored into pixmap buffers. Subsequently, at step 665, the pixmap is sent to the graphics display generator for display on the screen of the monitor. In this manner, the events are represented in a graphic display. To facilitate portrayal of multiple displays, the data structures from each event history storage are converted to a plurality of corresponding pixmaps. Each pixmap is then portrayed as a display in a different window on the monitor.

After step 665, the user can manipulate the input devices to continue the play function, pause (stop) the play function or review the information presently stored in the event history storage. If the user maintains the play function, another event or event(s) will be processed as discussed above and an updated pixmap will be displayed. If the user has indicated a pause is desired, e.g., depressing a "button" on a graphical interface or depressing a particular key combination on a keyboard, the routine continues along path 675 and will continue looping along this path until the user selects a function other than pause. These other functions are, illustratively, scroll, fast forward, fast reverse, magnify and search. Each alternative function is discussed in turn below.

As generally described previously, the user may scroll through the event history storage and dynamically display its contents. To facilitate scrolling, a time value is produced with each pass through routine 599. Each time value is a fixed, preset increment in time from the last. The preset increment can advance the time value or decrement the time value depending on a scroll direction selected. In this manner, with each pass through the loop, at step 645, a particular event (represented by a particular data structure) having an event time matching the presently set time value is selected to be positioned at the time-line in the display. From this time value (now the time-line time), magnification value, and resolution value, a new sub-range of data structures is defined, at step 650, from the event history storage. This new sub-range is converted to a pixmap which forms a new display, replacing the previous display, within the window. As such, the display is updated and seems to move in the direction selected for scrolling. Thereafter, the routine returns to step 610. If step 615 and 670 are still indicating a scroll function then the routine repeats the foregoing steps using a new time value incremented from the last time value that causes the display to update using a new sub-range of data structures. With each successive pass through the routine, the display updates. In this manner, a user can scroll forward or backward in time through the events represented as data structures in the event history storage.

Similarly, the fast forward and fast reverse functions operate in an identical manner to the scrolling function except that the increment between each time value is increased over that used for scrolling. The larger increment causes the display to appear to move quickly through the displayed data. In this manner, the same routine can be used for the scroll, fast forward and fast reverse by merely altering the increment size between time values used in steps 645 and 650. As with the scroll function, the fast reverse and fast forward are selected by the user manipulating the input devices.

The magnify function alters a multiplication factor (magnification value) used to adjust the currently used resolution value. To adjust the magnification value, a user alters the magnification value from a default value of 1 by manipulating the input devices. The "focal point" of the magnify function is the time-line. As such, the time value defined at step 645, illustratively 12:00:00, is not changed during use of the magnify function. Consequently, as the display is magnified less events will be displayed within a given display window. However, the event which is represented at the time-line is not altered. Those events portrayed at the display boundaries are eliminated from the display. In effect, the magnify function alters the sub-range of data structures used to produce the pixmap. Using the previous example wherein 1 million pixels, each representing 1000 events, were viewable using a resolution of 1 second. If the magnification value is changed from 1 to 4, the resolution value is divided by that value. Consequently, at step 650, the resolution value is divided by 4 to yield 250 nsec. Thus, each pixel now represents 250 events. As such, the visualization tool defines a new sub-range of data structures. Specifically, by selecting one out of every 250 data structures stored in the event history storage to produce a new sub-range containing 1 million data structures. From this new sub-range, the pixmap generator produces a pixmap having 1 million pixels along the horizontal dimension. As such, the magnified display portrays .25 seconds of events. 85% of this display is to the left of the time-line and 15% is to the right. Additionally, the pixel at the time-line still represents an event at 12:00:00. With each increase in the magnification value, the less the number of events represented by each pixel in the display. Ultimately, the display can be magnified until each pixel represents an event. Those skilled in the art will recognize that many other display review functions are available and that those discussed above are meant to be illustrative and not exhaustive of all the possible display review functions.

The search function enables a user to enter a specific character string from the keyboard. In response to this string, the function then searches the data structures event history storage for a matching character string. The character string can be a specific time value, a specific type of event or any other character string contained as a field in the data structures. Once the character string match is found, routine 599 sets, at step 645, the time value to the event time of the data structure that carries that character string. As discussed previously, the time value is equated to the time-line time to produce a new time-line time and at step 650 the sub-range is updated to reflect this new time-line time. As such, routine 599 updates, at steps 660 and 665, the displayed pixmap. In this manner, the display portrays a specific event at the time-line which carries in its respective data structure a field that matches the searched for character string.

The foregoing discussion focused on generating a time-varying display such as a parallelism or message passing display. However, instantaneous displays, such as bar graphs or pie charts, are generated by the same graphics processor routine. However, for these displays, the instantaneous displays portray events that occur at the time-line time only. As such, whenever the time-varying displays are updated, e.g., scrolling, the instantaneous displays are updated as well. In this manner, all the displays produced by the graphics processor routine are synchronized to the time-line time. Consequently, the multiple, synchronized displays generated by our invention afford a user the ability to quickly access, easily review and understand trace file data.

Although a single embodiment which incorporates the teachings of the present invention is shown and described in detail herein, those skilled in the art can readily devise many other varied embodiments that still incorporate these teachings.

## Claims

1. A visualization tool for creating a graphic display of trace data comprising:
a display monitor;
display control means for enabling a user to enter display commands;
mass storage means for storing said trace data; and
a computer system, connected to said display monitor, said display control means, and said mass storage means, comprising:
a graphics processor having retrieval means for retrieving said trace data from said mass storage means, data processor means connected to said retrieval means for converting said retrieved trace data into data structures, application logic means connected to said data processor means, wherein said application logic means comprises means for storing said data structures in an event history storage means, means for converting a subset of said data structures in said event history storage means into a pixel map, and means for storing said pixel map in buffer means; and
a graphic display generator means, connected to said graphics processor, for graphically displaying on said monitor said pixel map in a pre-selected display format.

2. The visualization tool of claim 1, wherein a number of data structures converted to form said pixel map and stored in said buffer means is less than a total number of data structures stored in said event history storage means.

3. The visualization tool of claim 1 or 2, wherein said pixel map contains a plurality of pixels wherein a pixel represents a plurality of data structures.

4. The visualization tool of claims 1 to 3, wherein said graphics processor further comprises means for altering a number of data structures contained in said plurality of data structures represented by said pixel without changing a time value represented by said vertically oriented, time reference line or/and wherein said graphics processor further comprises means for indicating when said pixel represents a plurality of data structures.

5. The visualization tool of claims 1 to 4, wherein said data processor further comprises a plurality of sub-processor means, connected to said retrieval means, for converting said retrieved trace data into a plurality of data structures associated with each of said sub-processor means, a plurality of application logic means, wherein each of said plurality of application logic means is connected to a respective sub-processor means, wherein said of said application logic means comprises means for storing said data structures from each of said respective sub-processor means in a plurality of event history storage means, means for converting said data structures from each of said respective sub-processor means into a respective pixel map, means for storing each of said pixel maps in a respective one of a plurality of buffer means and means for time synchronizing said pixel maps stored in each of said buffer means; and
wherein said graphic display generator means, connected to said graphics processor, further comprises means for forming a plurality of graphic displays on said monitor from each of said respective pixel maps located in each of said buffer means, each of said graphic displays is formed in a respective pre-selected display format.

6. The visualization tool of claims 1 to 5, wherein said pre-selected display formt or one of said pre-selected display formats is a window having said pixel map graphically displayed within said window to depict a time-varying display and wherein said graphic display includes a vertically oriented, time reference line disposed across said graphic display or wherein said pre-selected display format is a window having said pixel map graphically displayed within said window to depict an instantaneous display.

7. The visualization tool of claims 1 to 6, wherein said display control means further comprises means for moving said graphic display relative to said time reference line and/or wherein said display control means further comprises means for synchronously updating said plurality of displays such that each of said displays are synchronized to a time represented by said time reference line.

8. The visualization tool of claims 1 to 7, wherein a number of data structures converted to form a respective pixel map and stored in each of said buffer means is less than a total number of data structures stored in each of said event history storage means.

9. The visualization of claims 1 to 8, wherein said time-varying display is a display representing message passing in a parallel processing computer and/or wherein said time-varying display is a display representing parallelism in a parallel processing computer.

10. A method of creating a graphic display of trace data comprising the steps of:
retrieving, from a mass storage device, an event within said trace data;
converting said event into a data structure;
storing said data structure in an event history storage device;
converting said data structure into a pixel map;
storing said pixel map in a buffer;
creating a graphic display of said pixel map stored in said buffer, wherein said graphic display conforms to a pre-selected display format;
repeating said retrieving, converting, and storing steps; and
updating said graphic display as each said event is converted until all of said trace data is converted and displayed.

11. The method of claim 10 further comprising the steps of:
reviewing said events represented by said graphically displayed pixel map in response to user manipulation of input devices comprising the steps of:
sensing a request for movement of the graphically displayed pixel map;
retrieving, in response to said request, data structures from said event history storage device;
converting said retrieved data structures into a new pixel map;
storing said pixel map in said buffer; and
updating said graphic display after storing said new pixel map,
and/or further comprising the steps of:
converting said event into a plurality of data structures;
storing each of said data structures in a respective plurality of event history storage devices;
converting each data structure in said plurality of data structures into a respective pixel map forming a plurality of pixel maps storing each pixel map of said plurality of pixel maps in a buffer;
creating a plurality of graphic displays corresponding to said plurality of pixel maps stored in said buffers, wherein each of said graphic displays conforms to a respective pre-selected display format;
repeating said retrieving, converting, and storing steps; and
updating each of said graphic displays as each said event is converted into a plurality of data structures until all of said trace data is converted and displayed
or/and further comprising the steps of:
reviewing, in a simultaneous fashion, said graphically displayed pixel maps in response to user manipulation of input devices comprising the steps of:
sensing a request for movement of the graphically displayed pixel maps;
retrieving, in response to said request, data structures from each of said plurality of event history storage devices;
converting said retrieved data structures into a plurality of new pixel maps;
storing each of said new pixel maps in respective buffers; and
simultaneously updating said plurality of graphic displays after storing each new pixel map.

12. The method of claims 10 or 11, wherein one of said plurality of graphic displays wherein one of said preselected display formats is a window having said pixel map graphically displayed within said window to depict a time-varying display and wherein said graphic display includes a vertically oriented, time reference line disposed across said graphic display.

13. The method of claims 10 to 12, wherein reviewing step further comprises the step of moving said graphic display relative to said time reference line or/and wherein said reviewing step further comprises a step of synchronously updating said plurality of graphic displays such that each of said graphic displays are synchronized to a time represented by said time reference line.

14. The method of claims 10 to 13, wherein a number of data structures converted into each of said pixel maps is less than a total number of data structures stored in each of said event history storage devices.

15. The method of claims 10 to 14, wherein said pre-selected display format is a window having said pixel map graphically displayed within said window to depict an instantaneous display.

16. The method of claims 10 to 15, wherein said pixel map contains a plurality of pixels wherein a pixel represents a plurality of data structures.

17. The method of claims 10 to 16, wherein said converting step further comprises the steps of altering a number of data structures contained in said plurality of data structures contained in said plurality of data structures represented by said pixel without changing a time value represented by said vertically oriented, time reference line or/and wherein said converting step further comprises indicating when said pixel represents a plurality of data structures.

18. The method of claims 10 to 17, wherein said time-varying display is a display representing message passing in a parallel processing computer or wherein said time-varying display is a display representing parallelism in a parallel processing computer.
